# EUROPEAN PATENT APPLICATION

(11) **EP 4 451 549 A1**
(43) Date of publication of application: **23.10.2024**
(21) Application number: 24171405.4
(22) Date of filing: 19.04.2024
(51) Int. Cl.: H02P 27/08, H02M 7/5387

(54) **MULTIPURPOSE INVERTER CURRENT SENSE FOR MOTOR DRIVE APPLICATION**

(30) Priority: 19.04.2023 IN 202311028544
(71) Applicant: Hamilton Sundstrand Corporation, Charlotte, NC 28217-4578 (US)
(72) Inventor: KALLURI, Nageswara Rao, Bangalore (IN); SREEDHAR, Swathika, Chennai (IN); KUMAR, Manish, Bangalore (IN); GOWDA, Sharath, Tumkur (IN); SURAPURAJU, Bharath Kumar Raju, Bangalore (IN)
(74) Representative: Dehns

(57) **Abstract**

A motor drive system includes an inverter (206) comprising a plurality of switching elements on a first arm (206a). A first switching element (S1) and a first resistor (R1) are connected in series between a DC input and an arm midpoint (220a), and a second switching element (S2) and a second resistor (R2) are connected in series between the midpoint and ground. A signal conditioning circuit acts a sensor for the system and has first and second inputs. The first input is connected to the first leg between the first switching element and the first resistor, and the second input is connected to the first leg between the second resistor and the second switching element. The signal conditioning circuit can be the only current sensor connected to the arm and can be driven by the same power supply used to control the switching elements.

## Description

### CROSS-REFERENCE TO RELATED APPLICATIONS

This application claims the benefit of Indian Patent Application No. 202311028544 filed April 19, 2023.

### BACKGROUND

The following description is related to current sensing and, in particular, to current sensing for a motor drive.

As progress is made for creating an FEA (Fully Electric Aircraft) or an MEA (More Electric Aircraft), the functionality previously achieved by using pneumatic and hydraulic systems is now either replaced fully or partially by an electric system. Examples of systems being electrified include, but not limited to, flight controls, fuel pumps, oil pumps, cooling pumps, landing system, cargo and air management system etc. An integral part of an electrified system are motor drive electronics (MDEs) that control a motor along with other components like feedback and monitoring sensors, mechanical connections etc.

Of importance to this disclosure, motor current sensing is an essential function of the motor drives. Being able to sense current supplied to the various phases of the motor allows for the regulation of the current, and, thus, the torque produced by the motor.

Traditionally, there are different approaches available on the sensing point and type of sensing. In addition to the current regulation, sensing of the current can also be used to protect the motor drive. The currents can, for example, be used to identify various faults pertaining to the motor such as over-current, inverter/bridge shoot through, motor phase grounded, inverter output grounded, all of which could damage the motor drive.

### BRIEF DESCRIPTION

According to an aspect of the disclosure, a motor drive system, includes a direct current (DC) power source, an inverter comprising a plurality of switching elements, wherein the inverter is configured to receive a DC input from the DC power source and output an alternating current (AC) to three phases of a motor. The inverter includes: a first arm that defines a midpoint connected to a first phase of the motor, wherein the first arm includes: first and second switching elements; and first and second resistors. The first switching element and the first resistor are connected in series between the DC input and the midpoint, the second switching element and the second resistor are connected in series between the midpoint and ground and the midpoint is between and connected to the first and second resistors. The system also includes a controller that controls the operation of the switching elements; a high side power supply that provides power for upper gate logic to control the switching elements on a high side of the inverter; and a first signal conditioning circuit having first and second inputs, wherein the first input is connected to the first leg between the first switching element and the first resistor, and the second input is connected to the first leg between the second resistor and the second switching element.

In one embodiment, the first signal conditioning circuit is the only signal conditioning circuit connected to the first leg.

In one embodiment, the inverter further includes: a second arm that defines a second midpoint connected to a second phase of the motor, wherein the second arm includes: third and fourth switching elements; and third and fourth resistors; wherein the third switching element and the third resistor are connected in series between the DC input and the second midpoint, the fourth switching element and the fourth resistor are connected in series between the second midpoint and ground and the second midpoint is between and connected to the third and fourth resistors.

The system can also include a second signal conditioning circuit having first and second inputs, wherein the first input of the second signal conditioning circuit is connected to the second leg between the third switching element and the third resistor, and the second input of the second signal conditioning circuit is connected to the second leg between the fourth resistor and the fourth switching element. The second signal conditioning circuit can be the only signal conditioning circuit connected to the second leg.

In one embodiment, the inverter further includes a third arm that defines a third midpoint connected to a third phase of the motor, wherein the third arm includes: fifth and sixth switching elements; and fifth and sixth resistors. The fifth switching element and the fifth resistor are connected in series between the DC input and the third midpoint, the sixth switching element and the sixth resistor are connected in series between the third midpoint and ground and the third midpoint is between and connected to the fifth and sixth resistors.

In one embodiment a third signal conditioning circuit having first and second inputs is provided, wherein the first input of the third signal conditioning circuit is connected to the third leg between the firth switching element and the fifth resistor, and the second input of the third signal conditioning circuit is connected to the third leg between the sixth resistor and the sixth switching element. The third signal conditioning circuit is the only signal conditioning circuit connected to the third leg.

### BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings in which:
FIG. 1 shows a system with various current monitoring points in an example motor drive electronics circuit; and
FIG. 2 shows an example of a current monitoring system in an example motor drive system according to one embodiment.

These and other advantages and features will become more apparent from the following description taken in conjunction with the drawings.

### DETAILED DESCRIPTION

As will be described below, a current sensing system/method is provided that can streamline the current measurement functions for motor drive electronics. One embodiment, may provide a single sense location that an monitor for faults (e.g., shoot through protection, Motor faults, overload) and motor control. Embodiments may provide a power supply - High side gate power supply to drive current sense rails. This removes isolated power converters for current sense functions and may saves board space and reduce the number of required power supplies. Embodiments may also reduce current sensor resistor power dissipation and have minimal to no high voltage for the current sense signals and easy to route in the layout unlike very difficult in traditional motor current sense systems.

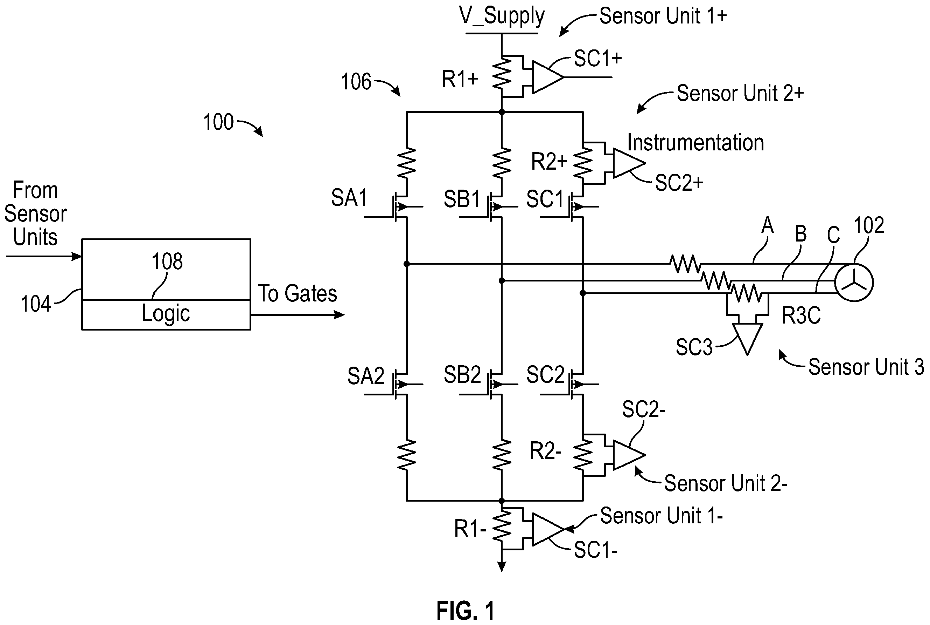

With reference to FIG. 1, motor control electronics 100 for a three phase motor 102. The electronics can be referred to as drive system herein. The drive system 100 includes a control unit 104 and a three phase inverter 106.

The three-phase inverter converts DC power received from a DC source in to three phase AC power that is provided to the motor 102. The DC source is shown a V_Supply in FIG. 1.

The control unit 104 can be any type of processor and can be single number or can be distributed. Other examples can include an FPGA and the like.

The control unit 104 can receive signals from sensor units that are described below. The controller 100 can include a logic 108 that provides gate drive signals to a plurality of switches SA1, SA2, ....SC2 of the inverter 106 so as to convert the DC voltage to AC power provided to each phase (A, B, C) of the motor 102 in the known manner.

As shown in FIG. 1, there are four current sensing locations in the inverter 106 that can be utilized to measure current. However, unlike in embodiments disclosed below, a single sensing location for each phase won't provide enough information for both current/torque regulation and fault detection. In particular, at least two of three the sensing locations in FIG. 1 would be needed for an understanding of the currents related to phase C. Each other phase would also need its own sensing elements that mirror the sensing due to R2/R3 described below.

As shown in FIG. 1, each current sensor unit has two parts, a sense resistor and a signal conditioning circuit. The sense resistors (e.g., R1+, R1-, ...R3C) are placed in the path of current to be detected and the signal conditioning circuit (SC1+, SC1-, ---SC3) measures the voltage drop across the sense resistor. The signal conditioning circuits SC convert the voltage to a digital signal compatible with control unit 104 These can be implemented, for example, as differential amplifiers. The control unit 104 can utilize current information with a motor control algorithm and can direct the logic (e.g, gate driver) 108 to operate the switches SA1... SC2 as needed.

In more detail, the R1 resistors are located such they act as shunt resistors and can be used to detect short circuit faults such as switch phase-leg shoot through and motor winding short circuit can be partially (during PWM drive side) detected. As shown, there are two R1 resistors R1+, R1- are connected, respectively, between V supply and the inverter 106 and between the inverter 106 and ground. The Signal conditioning circuits (e.g., SC1+ and SC1-) require an isolated power supply. The inventors hereof have discovered that the resistors R1 need high power dissipation capability and, thus, not suitable for high current applications. Further, making the above determinations can require complex firmware to reconstruct the three-phase currents and Torque loop execution is not possible.

The R2 resistors in this position shown require three low-side shunts for three individual phase legs. Phase leg shoot-through and partial motor winding open faults can be detected. Because individual resistors are used for each leg, smaller shunts with lesser power dissipation capacity are sufficient which helps in PCB area and cost optimization. Torque loop execution could be of complex since current is sensed only when the lower switch of each leg (SA1, SB2, SC2) is conducting and the measurements by software/firmware need to be synchronized for the same.

The location of the R3 resistors allow inline current measurement method implements shunt resistors directly in the motor phase lines. Since the current being passed through motor phases is measured directly, torque loop can be implemented easily. Motor winding open and short-circuit faults can be easily detected. However, it has been discovered by the inventors herein that a drawback is that the inputs of the signal conditioning circuit SC3 is exposed to large common mode transients which affects the accuracy of feedback control. Further, three isolated power supplies (one for each phase) are required which makes the design bulky. This location also lacks the inverter shoot through information.

Thus, it can be seen from the above that the prior art requires at least two of the three locations and each has its own drawbacks and all lead to larger and more complex circuits.

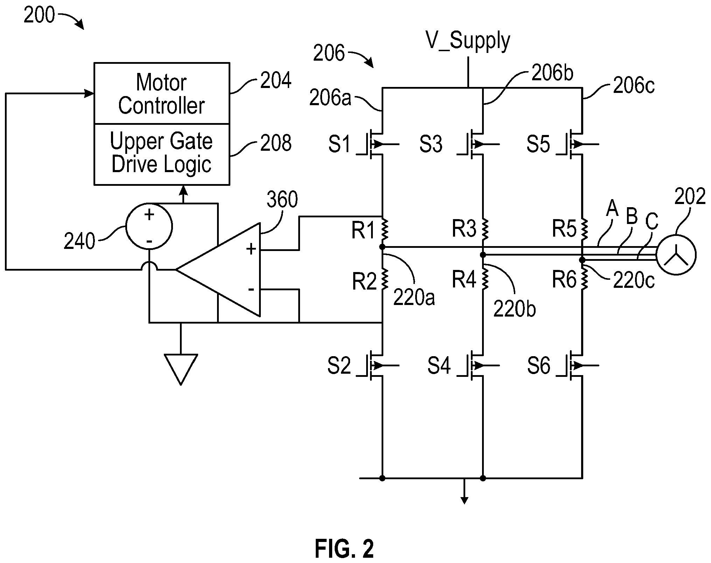

FIG. 2 shows an example of a drive system/motor controller 200 according to one embodiment. The system can include, for each phase, a single signal conditioning circuit. This circuit can be powered by the same power supply used to drive the gates of the inverter switches (S 1, S3, S5).

In more detail, the drive system 200 of FIG. 2 provides power to drive a three phase motor 202. The drive system 200 operates as an inverter that converts DC power received from a DC source in to three phase AC power that is provided to the motor 202. The DC source is shown a V_Supply in FIG. 2.

The drive system 200 includes a motor controller 204 and an inverter 206. The controller 204 can be any type of processor and can be a single number or can be distributed. Other examples can include an FPGA and the like.

The controller 204 can receive signals from current sensor units that are described below. The controller 204 can include upper gate driver logic 208 that provides gate drive signals to the upper (e.g., above the midpoint) branch of each arm. As shown, this includes switches S 1, S3 and S5 in the inverter 206 to convert the DC voltage to AC power provided to each phase (A, B, C) of the motor 202 in the known manner. The lower side switches will include their own lower gate drive logic (not shown) which has its own power supply that is isolated from the upper gate drive power supply 240 discussed below.

As shown in FIG. 2, there is a single sensing location across a first leg 206a of the inverter 206. Each other leg 206b, 206c can also be configured in the same manner and have the same single sensing location as shown relative to leg 206a. The single sensing location in each leg does not require a sensor on both the top and bottom portions of the inverter. (e.g, Sensor Units 1+ and 2+ and Sensor units 1- and 2- of FIG 1).

As shown in FIG. 2, each current sensor unit has three parts, two resistors and a signal conditioning circuit, connected across the two resistors. The arrangement of these elements is discussed further below.

In FIG. 2, the inverter 206 has three legs 206a, 206b and 206c. The inverter 206 is connected between V_Supply and ground. Each leg includes a midpoint (or connection point) 220a, 220b, 220c. Each midpoint 220a, 220b, 220c is connected to a respective phase A, B, C of the motor 202.

In more detail, leg 206a includes switch S1 and resistor R1 connected in series between V-Supply and the midpoint 220a. As shown, resistor R1 is connected between S 1 and the midpoint 220a. Leg 206a includes switch S2 and resistor R2 connected in series between the midpoint 220a and ground. As shown, resistor R2 is connected between S2 and the midpoint 220a. In some cases, the resistor/switch combination between V-Supply and the midpoint 220 can be referred top/high side of the inverter leg and the resistor/switch combination between the midpoint 220 and ground is the low side of the leg. Each other leg is similarly arranged.

As shown the controller includes upper side gate logic 208. This logic 208 will cause the switches S 1, S3, S5 to be opened or closed to produce the desired three phase power to the motor 202. While not shown, separately powered lower side logic can control switches S2, S4 and S6. The operation of such logic is known in the art.

The controller 204/ logic 208 will use an upper side power supply 240 to provide the control signals to the switches S1, S3 and S5. The reason two separate power supplies are used is because the lower side can include its own power supply (not shown) due to the fact that the high side and low side drive functionality requires isolation between the respective power supplies The upper side power supplies 240 can be low-power power supply in the range of 1-5V for example.

The system also includes a signal conditioning circuit 360. As will be understood, the signal conditioning circuit 360 needs to be arranged on each of the legs. In one embodiment, a single signal conditioning circuit 360 is provided for each leg. The signal conditioning circuit 360 of FIG. 2 is shown as instrumentation and receives power from the upper side power supply 240. In one embodiment, the upper side power supply 240 is also used by the upper gate driver to drive gate of S1. It shall be understood that separate power supply can be provided for each gate drivers of other switches S3, S5.

The signal conditioning circuit 360 has two inputs. One is connected between S1 and R1 and the other is connected between R2 and S2. R1 and R2 can be of equal size and power capacity in one embodiment. The signal conditioning circuit 360 compares the two inputs an produces an output that can be provided to the controller 204. Sensing at this location can provide both fault detection and motor control data with a single sensor. The fact the only a single sensor is provided can mean that only one signal conditioning circuit is connected a particular leg.

The power supply 240 can be connected to the power inputs of the signal conditioning circuit 360 as shown in FIG. 2.

The data can include direction of motor currents. Each type of fault detection/control data can be determined based on the value/magnitude of the signal output by the conditioning circuit 360. Of course, other types of signal conditioning circuits 360 could be used. For example, the signal conditioning circuit 360 could be a resistor sensor or Hall type sensor.

Embodiments herein can provide a single sense location for faults (Shoot through protection, Motor faults, overload) and motor control. In one embodiment, a simple power supply - High side gate power supply to drive current sense rails. This removes isolated power converters for current sense function and can saves board space by limiting the number of power supplies. Also, by having fewer resistors, there is lower current sensor resistor power dissipation capability required in other locations. Further, embodiments can provide minimal or no high voltage coupling for the current sense signals and easy to route in the layout unlike very difficult in traditional motor current sense.

While the disclosure is provided in detail in connection with only a limited number of embodiments, it should be readily understood that the disclosure is not limited to such disclosed embodiments. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A motor drive system, comprising:
a direct current, DC, power source;
an inverter (206) comprising a plurality of switching elements, wherein the inverter is configured to receive a DC input from the DC power source and output an alternating current, AC, to three phases of a motor (102), wherein the inverter includes:
a first arm (206a) that defines a midpoint (220a) connected to a first phase of the motor, wherein the first arm includes:
first and second switching elements (S1, S2); and
first and second resistors (R1, R2);
wherein the first switching element (S1) and the first resistor (R1) are connected in series between the DC input and the midpoint, the second switching element (S2) and the second resistor (R2) are connected in series between the midpoint and ground and the midpoint is between and connected to the first and second resistors;
a controller (104) that controls the operation of the switching elements;
a high side power supply that provides power for upper gate logic to control the switching elements on a high side of the inverter; and
a first signal conditioning circuit (360) having first and second inputs, wherein the first input is connected to the first leg between the first switching element and the first resistor, and the second input is connected to the first leg between the second resistor and the second switching element.

2. The system of claim 1, wherein the first signal conditioning circuit (360) is the only signal conditioning circuit connected to the first leg.

3. The system of claim 1 or 2, wherein the inverter (106) further includes:
a second arm (206b) that defines a second midpoint (220b) connected to a second phase of the motor, wherein the second arm includes:
third and fourth switching elements (S3, S4); and
third and fourth resistors (R3, R4);
wherein the third switching element (S3) and the third resistor (R3) are connected in series between the DC input and the second midpoint, the fourth switching element (S4) and the fourth resistor (R4) are connected in series between the second midpoint and ground and the second midpoint is between and connected to the third and fourth resistors.

4. The system of claim 3, further comprising: a second signal conditioning circuit having first and second inputs, wherein the first input of the second signal conditioning circuit is connected to the second leg (206b) between the third switching element (S3) and the third resistor (R3), and the second input of the second signal conditioning circuit is connected to the second leg between the fourth resistor (R4) and the fourth switching element (S4).

5. The system of claim 4, wherein the second signal conditioning circuit is the only signal conditioning circuit connected to the second leg (206b).

6. The system of claim 4 or 5, wherein the inverter further includes:
a third arm (206c) that defines a third midpoint (220b) connected to a third phase of the motor, wherein the third arm includes:
fifth and sixth switching elements (S5, S6); and
fifth and sixth resistors (R5, R6);
wherein the fifth switching element (S5) and the fifth resistor (R5) are connected in series between the DC input and the third midpoint, the sixth switching element (S6) and the sixth resistor (R6) are connected in series between the third midpoint and ground and the third midpoint is between and connected to the fifth and sixth resistors.

7. The system of claim 6, further comprising: a third signal conditioning circuit having first and second inputs, wherein the first input of the third signal conditioning circuit is connected to the third leg (206c) between the fifth switching element (S5) and the fifth resistor (R5), and the second input of the third signal conditioning circuit is connected to the third leg between the sixth resistor (R6) and the sixth switching element (S6).

8. The system of claim 6 or 7, wherein the third signal conditioning circuit is the only signal conditioning circuit connected to the third leg (206c).
